Europäisches Patentamt

(19) European Patent Office

Office européen des brevets

(11) Publication number: **0 033 220**
**B1**

(12) # EUROPEAN PATENT SPECIFICATION

(45) Date of publication of patent specification: **11.04.84**

(21) Application number: **81300266.4**

(22) Date of filing: **21.01.81**

(51) Int. Cl.³: **C 08 F  255/00,**
C 08 F  2/02, C 08 L  27/06
//B01J19/20, B29F3/03,
(C08F255/00, 220/14),
(C08L27/06, 51/06)

(54) **The preparation of graft copolymers, poly (vinyl chloride) compositions containing them and reactors useful in preparing them.**

(30) Priority: **23.01.80 US  114478**

(43) Date of publication of application:
**05.08.81 Bulletin 81/31**

(45) Publication of the grant of the patent:
**11.04.84 Bulletin 84/15**

(84) Designated Contracting States:
**BE CH DE FR GB IT LI NL SE**

(56) References cited:
**FR - A - 1 150 896**
**FR - A - 1 494 634**
**GB - A - 1 062 980**
**GB - A - 1 318 807**
**US - A - 3 177 270**
**US - A - 3 622 652**
**US - A - 3 862 265**
**US - A - 4 026 967**

**CHEMICAL ABSTRACTS, Vol. 70, No. 4, 1969 p.
18, abstract 58507g Columbus, Ohio, USA**

(73) Proprietor: **Rohm and Haas Company
Independence Mall West
Philadelphia, Pennsylvania 19105 (US)**

(72) Inventor: **Staas, William Henry
88 N. Kitty Knight Drive
Churchville, Pennsylvania, 18966 (US)**

(74) Representative: **Angell, David Whilton et al,
Rohm and Haas Company Patent Department
Chesterfield House Bloomsbury Way
London WC1A 2TP (GB)**

# The preparation of graft copolymers, poly(vinyl chloride) compositions containing them and reactors useful in preparing them

This invention is concerned with the preparation of graft copolymers. In the invention a melt graft polymerization process is used and the copolymers prepared are suitable for impact modification of poly(vinylchloride) and other vinylchloride polymers; referred to collectively herein as PVC.

Conventional impact modifiers for PVC are multiple stage polymers having a butadiene or a methyl acrylate or ethyl acrylate first stage, and methyl methacrylate, acrylonitrile and/or styrene in one or more subsequent stages. U.S. Patents 2,892,809; 2,943,074; 3,251,904 teach typical modifiers. Chlorinated polyethylene and ethylene-vinyl acetate have also been shown to be useful, see Encyclopedia of Polymer Science and Technology, under "Impact Resistance, PVC" and Plasty a Kaucuk *13*, 129 and 193 (1976) and Plastics Technology, July 1975, page 48.

Each of these prior modifiers suffer from one or more disadvantages in the area of weatherability, impact efficiency, compound-ability, processability into blends with PVC or properties of blends with PVC.

Steinkamp et al., in U.S. Patent 3,862,265, show improvements to polyolefins in flow and adhesion by a controlled reaction, often involving degradation, in an extruder in which initiator is injected under conditions of either maximum distribution or intensive mixing wherein appreciable rheological, i.e. molecular weight distribution, changes in said base polymer occur.

In some embodiments monomers are also grafted during the degradation process. The extruder reactors shown by Steinkamp have a first polymer addition and melting zone, a second zone for monomer and initiator addition and reaction, and a third zone for vacuum devolatilization and extrusion or removal of product. In the second zone, the mixing is highly intensive in a very short period of time. Materials can be added prior to the reaction zone, become mixed by extruder action, and thence conveyed to the reaction zone where they are available to participate in the reaction. Steinkamp does not show graft polymers which are useful as impact modifiers for PVC.

Nowak et al., in U.S. Patent 3,177,269 teach an extruder grafting process using an olefine polymer substrate and grafting thereto acrylic acid, methacrylic acids, or mixtures thereof. The graft polymer is recovered by use of an inert solvent, and is used as a molding resin.

Jones et al., in U.S. Patent 3,177,270, teach a process similar to Nowak, supra, except using monovinyl aromatic compounds as the grafting monomer.

Fournier et al., in Canadian Patent 1,003,145 teach a process of preparing graft polymers by solution polymerization in inert solvent wherein a resin-forming monomer is grafted to a rubbery copolymer of at least two alpha-monolefins such as ethylene-propylene copolymers or ethylene-propylene diene terpolymers. The resin-forming monomer can be styrene, vinyl chloride, methyl methacrylate, or other monomers or mixed monomers. The graft is isolated by precipitation with methanol, and is used as an impact modifier for certain plastics such as styrene-methyl styrene, styrene-methacrylic acid, styrene-methyl methacrylate and styrene-acrylonitrile.

Other prior art of interest is U.K. Patent Specifications 1,119,629 and 1,158,980.

This invention provides a process for producing graft copolymer which comprises (a) introducing one or more polymers of ethylene, not including high density polyethylene into a melt reactor, (b) introducing monomer comprising at least 50% by weight methyl methacrylate (MMA), and (c) polymerizing the monomer in the presence of initiator and a melt of the polymer(s) under such conditions as to cause graft polymerization, but in the absence of solvent which dissolves or swells the polymer.

Graft polymers can be made by the process of the invention which all weatherable, highly efficient, modifiers for PVC with which they are readily compatible. In other words we have found that ethylene polymers, which are normally incompatible with PVC by ordinary mixing techniques and because of this incompatibility form polyblends with PVC which are non-uniform in appearance and non-resistant to impact, can be compatibilized with PVC by grafting them with methyl methacrylate, for example by the melt reaction of the invention, to form polyblends which are highly impact resistant, and weather resistant as well.

Suitable ethylene polymers are ethylene-propylene copolymer (EP), ethylene-vinyl acetate copolymer (EVAc), ethylene-ethyl acrylate copolymer (EEA), low density polyethylene (LDPE), ethylene-propylene-diene terpolymer (EPDM), and other polymers of ethylene, but high density polyethylene (HDPE) is not suitable and should not be included. These copolymers are readily available as commercial products.

Apart from the methylmethacrylate the monomer can contain other monoethylenically unsaturated monomer, for example vinyl monomer such as vinyl acetate, other methacrylate than the methyl ester, styrene and substituted styrenes, $C_1$ to $C_6$-alkyl acrylates, acrylic and methacrylic acids, acrylonitrile, vinyl chloride, maleic anhydride and other copolymerizable monoethylenically unsaturated monomers too numerous to mention. The selection of comonomers should be restricted, however, to these types and amounts which do not detract from the impact modification efficiency attained when using methyl methacrylate alone as the grafting monomer. One particular monomer system is a mixture of MMA and vinyl acetate in a 90/10 ratio, but all MMA is preferred from a convenience standpoint. The preferred ratio of added monomer to polymer is 5:95 to 50:50 by weight and the initiator is preferably present in an amount of 0.01 to 4% by weight based on monomer.

This invention therefore also extends to PVC compositions containing impact modifying polymer of monomer comprising at least 50% by weight grafted onto one or more polymers of ethylene not including high density polyethylene.

Any melt reactor device which is capable of melt masticating polymer, receiving and thoroughly mixing monomer and initiator before and/or during the initiation of polymerization of said monomer, and finally removing excess monomer via a devolatilizing procedure, is suitable. For example, an extruder, a sigma mixer, a Brabender, can be used. However, an extruder has been found to be a highly preferred melt reactor device, and especially certain specific types of extruder reactors have been found to be advantageous. The invention extends to most extruder reactors having at least five zones: a polymer melt zone, a monomer addition zone, a separate initiator addition zone subsequent to the monomer addition zone, a separate reacting zone, and a separate devolitalization zone; the extruder being most preferably of the counter-rotating tangential twin screw type. It is preferable that the monomer addition zone be a flighted section wherein monomer addition takes place on full screws under full pressure, but not under high shear.

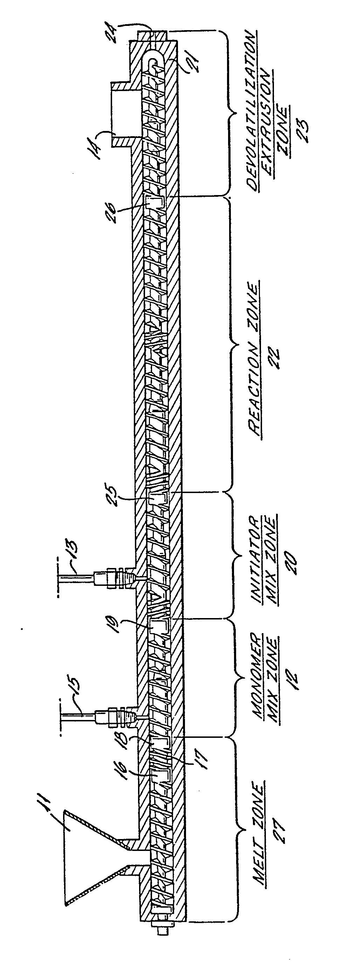

In accordance with a preferred method of the invention, referring to the accompanying drawing, which is a sectional elevational view of the extruder cavity but a side elevational view of an extruder screw as a suitable extruder reactor, polymer to be grafted is introduced to the extruder through a suitable feed port 11, melted and conveyed to the monomer addition zone 12 which is bounded on its proximal and distal ends by non-flighted tight fitting segments 18 and 19. Segment 19 could suitably alternatively be flighted or even reverse flighted. The constraints placed upon these screw segments which define the beginning and end of the monomer addition zone are only those which are necessary effectively to restrain the passage of monomer and polymer from the monomer addition zone into the next extruder zone until said monomer and polymer are intimately mixed. Passing from the monomer addition zone 12, the monomer-polymer mix is conveyed into an initiator addition zone 20, the proximal and distal ends of which are bounded likewise by segments 19 and 25 which restrict movement of monomer/polymer and initiator until thorough and uniform blending of these materials has occurred. It is possible that some decomposition of initiator to radical fragments occurs in this zone, but the bulk of the reaction occurs in the next zone 22 which is the reaction zone, typically but not necessarily, the largest of the zones. This reaction zone is similarly bounded on its ends by tight-fitting sections 25 and 26 which prohibit back mixing into the preceding zone or escape of volatiles into the next zone 23 which serves as the devolatilization zone where excess monomer is removed through vacuum vent 14 so that the grafted product is obtained in strand form at the die 24 with no further purification step necessary.

The five-zone grafting extruder system described herein is a distinct improvement over many prior art systems as it has safety advantages. Since initiator never has access to large amounts of heated monomer, in the case of breakdown or power failure a runaway reaction is avoided. Also the danger of the monomer addition line being plugged because of polymer formation in the addition line itself, at or near the addition port nozzle, is minimised. Another advantage is that once the mix of monomer, polymer, and initiator enters the reaction zone, the temperature of the mix is high enough to produce extensive free-radical decomposition and commence grafting of monomer to polymer, assisting formation of a uniform product. The preferred reaction temperature is 100 to 225°C, more preferably 150 to 200°C. The following non-limiting Examples 1 to 18 and 20 to 22 are presented to illustrate some embodiments of the invention. Example 19 is comparative. All parts and percentages are by weight unless otherwise indicated.

### Example 1

An ethylene-propylene (EP) copolymer was fed at a rate of 25 g./minute into a counter rotating, tangential, twin screw extruder, having a cavity as illustrated in the drawing. The polymer was added at polymer addition port 11, and fluxed and conveyed across an unflighted tight fitting compounding screw segment 16 into a monomer addition zone 12 bounded on its distal end by another cylindrical compounding section 19. In this addition zone methyl methacrylate (uninhibited) was added @ 50 cc./minute) via addition port 15. Mixing of polymer and monomer occurred and the mixture passed over a cylindrical compounder 19 into an initiator mix zone 20 where initiator in toluene solution (25 g. 2,5-dimethyl-2, 5-di-t-butylperoxy hexyne-3 (Lupersol 130) diluted to 1 liter with toluene) was added via port 13 (@ 8 cc./minute). Mixing of the three components (polymer, monomer, and initiator solution) continued until the mix passed over a double compounding section 25 (cylindrical and double reverse compounders in tandem), into a lengthy reaction zone 22 which itself contained many tight compounding sections designed in these cases not to form separate and distinct additive/mixing zones but rather to bring about continued and thorough mixing of the reactants throughout the reaction zone. The material finally passed into a devolatilizing zone 23 where excess volatiles were removed via port 14. For every 100 g. of polymer fed to the extruder, 140 g. of graft product was obtained at die 24. The temperature of reaction was set at 175°C.

### Example 2
As example 1, replacing 100% EP polymer with a mixture (25/75) of EP/LDPE. Each 100 g. of polymer fed yielded 130 g. of product.

### Example 3
As example 1, replacing 100% EP polymer with a mixture (75/25 of EP/LDPE. Each 100 g. of polymer fed yielded 133 g of product.

### Example 4
As example 1, using ethylene vinyl acetate (91E/9VA) in place of EP rubber. Each 100 g of polymer fed yielded 119 g. of product.

### Example 5
As example 1, substituting 100% EP rubber with 75 parts EVA (91E/9VA) and 25 parts EP. Each 100 g. of polymer fed yielded 116 g of product.

### Example 6
As example 1, substituting 100% EP rubber with 25 parts EVA (91D/9VA) and 75 parts EP. Each 100 g of polymer fed yielded 118 g of product.

### Example 7
As example 1, replacing 100% EP copolymer with EVA (95E/5VA). Each 100 g of polymer fed yielded 133 g of product.

### Example 8
As example 1, replacing 100% EP copolymer with a blend of 75 parts LDPE and 25 parts EP. Each 100 g of polymer fed yielded 133 g of product.

### Example 9
As example 1, replacing 100% EP copolymer with a mixture of 25 parts LDPE and 75 parts EP. Each 100 g of polymer fed yielded 133 g of product.

### Example 10
To a three quart working capacity sigma mixer (Teledyne Readco) whose temperature was controlled by a HAAKE circulating oil bath (set at 150°C) was charged 1200 g. of EP rubber. When temperature of the mixer had reached 100°C, 314 g. of MMA (uninhibited monomer) containing 8.6 g. of Lupersol 130 was added all at once and the mixer sealed. The mixer was operated at 75 RPM's throughout the reaction procedure. The monomer/polymer mix was masticated and well blended while the temperature of the reactor rose to 130°C. At that time, 2.9 g. of t-butylperoctoate in 86 g. of MMA (uninhibited monomer) was added to the reaction chamber via a Lapp pump. Addition was complete in 14 minutes (toluene was used to clean the lines up to the reactor to assure that all initiator solution was added to the reactor and no initiated monomer remained in the addition lines). A very rapid exotherm accompanied the addition of the low temperature initiator system. Peak temperature was 175°C after about twenty minutes. One hundred minutes after addition was complete the reactor temperature was 155°C. The reactor was evacuated to remove unreacted monomer. One thousand, five hundred and seven (1507) grams of polymer were obtained.

### Example 11
As example 1, using an initiator solution containing 1-octene as a grafting aid (25 g. of Lupersol 130 plus 50 g. of 1-octene diluted to 1 liter with toluene).

### Example 12
As example 11 using a 95 parts MMA/5 parts hydroxyethylmethacrylate (HEMA) monomer feed.

### Example 13
As example 11 using a 90 parts MMA/10 parts vinyl acetate.

### Example 14
As example 11 using ethylene-ethylacrylate as the grafting substrate.

### Example 15
As example 1, using EPDM as the base polymer.

### Example 16
As example 15, using 90 MMA/10VAc as the monomer system.

### Example 17
As example 1, using LDPE as the polymer, and MMA as the grafting monomer.

### Example 18
As example 1, adding calcium carbonate filler to the polymer feed port 11 along with the base polymer.

### Example 19
### (Comparative)
A solution grafted EP-g-MMA was made by charging 40 g. of the same EP as used in Example 1 into a pressure bomb along with 493 g. of benzene solvent sealed and heated to 90°C to yield a cement. To this cement after cooling to room temperature was added 62.5 g. of MMA and 1.225 g. of di-t-butylperoxide. The bomb was resealed, stirred and heated to 125°C overnight. The product graft was precipitated in MeOH in a Waring blender; filter, concentrated on a rotary evaporator and dried in a vacuum oven. The graft polymer produced was formulated with PVC and compared with the analogous graft polymer of the invention. The results are reported in Example 22. The lower temperature impact efficiency of this comparative graft polymer prepared in accordance with the prior art was markedly lower.

### Example 20
As Example 1 employing a 90 methyl methacrylate/10 maleic anhydride monomer mix, and an ethylene/ethyl acrylate feedstock polymer.

### Example 21
As Example 1 using a 25 EP/75 EVA blend as the polymer feed.

### Example 22
Performance of Various Grafts in PVC.

| Graft Type (Example No.) | Formulation | Notched Izod Impact | |
| --- | --- | --- | --- |
| | | J/m (ft-lbs/in.) Room Temp. | 16°C |
| EP-g-MMA (1) | 1 | 907.8 (17) | — |
| EP-g-MMA (1) | 2 | 1335 (25) | — |
| EP-g-MMA/VA (13) | 1 | 961.2 (18) | — |
| EPDM-g-MMA (15) | 1 | 907.8 (17) | — |
| EPDM-g-MMA/VA (16) | 1 | 961.2 (18) | — |
| EVA-g-MMA (7) | 3 | 1121.4 (21) | — |
| EEA-g-MMA/MAH (20) | 3 | 961.2 (18) | — |
| LDPE-g-MMA (17) | 4 | 1121.4 (21) | — |
| 25EP/75LDPE-g-MMA (2) | 4 | 1121.4 (21) | — |
| 25EP/75EVA-g-MMA (21) | 3 | 1174.8 (22) | — |
| *Comparative* (Extruder Graft vs. Solution Graft) | | | |
| EP-g-MMA (1) | 3 | 1281.6 (24) | 1174.8 (22) |
| EP-g-MMA (19) | 3 | 1228.2 (23) | 747.6 (14) |
| *Comparative* (Ungrafted Polymer) | | | |
| EP | 1 | 48.06 (0.9) | — |
| EPDM | 1 | 48.06 (0.9) | — |

These results demonstrate that the modifier of this invention made in Example 1 has substantially the same impact modification properties as the Comparative material at room temperature but that whereas the Comparative material falls away in performance at the lower temperature, indicating rapid embrittlement, the modifier of the invention retains its performance (within normal experimental error). This coupled with the weatherability of saturated modifiers, such as those of the invention, which is known to be better in general than unsaturated monomers such as those based upon butadiene, indicates the advantageous properties of the modifiers of the invention.

### Formulations
(1) 100 PVC (K=69)/11 modifier/2.2 dibutyltin dioxide stabilizer.

(2) 100 PVC (K=69)/7 modifier/2 lubricating processing aid/2 stabilizer.

(3) 100 PVC (K=69)/8 modifier/2.4 acrylic processing aid/0.4 lubricant/1 ethylene bis stearamide/2 dibutyltin dioxide stabilizer/10 TiO₂.

(3) 100 PVC (K=69)/8 modifier/2.4. acrylic processing aid/0.4 lubricant/1 ethylene bis stearamide/2 dibutyltin dioxide stabilizer/10 TiO$_2$.

(4) 100 PVC (K=69)/4 modifier/2.4 acrylic processing aid/0.9 lubricant/1 ethylene bis stearamide/14 TiO$_2$/2 dibutyltin dioxide stabilizer.

## Claims

1. A process for producing a graft copolymer which comprises (a) introducing one or more polymers of ethylene, not including high density polyethylene, into a melt reactor, (b) introducing monomer comprising at least 50% by weight methyl methacrylate, and (c) polymerizing the monomer in the presence of initiator and a melt of the polymer(s) under such conditions as to cause graft polymerization, but in the absence of solvent which dissolves or swells the polymer.

2. A process as claimed in Claim 1 wherein the polymer(s) comprise one or more of the following: ethylene-propylene copolymers ethylene-propylene-diene terpolymers, ethylene-vinyl acetate copolymers, ethylene-ethyl acrylate copolymers, and mixtures of ethylene-propylene copolymer(s) and low density polyethylene polymer(s).

3. A process as claimed in Claim 1 wherein the melt reactor is an extruder reactor.

4. A process as claimed in Claim 3 wherein the extruder reactor is a twin screw counter-rotating, tangential extruder having a monomer addition zone, a separate initiator addition zone downstream of the monomer addition zone, and a separate reaction zone.

5. A process as claimed in Claim 4 wherein the monomer addition zone comprises a flighted screw section and is such that monomer addition takes place on full screws under full pressure, but not under high shear.

6. A process as claimed in any preceding claim wherein the ratio of monomer added to polymer is 5:95 to 50:50 by weight.

7. A process as claimed in any preceding claim wherein the initiator is present in an amount of 0.01 to 4% by weight based on monomer.

8. A process as claimed in any preceding claim wherein the initiator comprises 2,5-dimethyl-2,5-di-t-butylperoxyhexyne-3.

9. A process as claimed in any preceding claim wherein the reaction temperature is 100°C to 225°C.

10. A process as claimed in Claim 9 wherein the temperature is 150°C to 200°C.

11. A composition comprising polyvinyl chloride and impact modifying polymer of monomer comprising at least 50% by weight methyl methacrylate grafted onto one or more polymers of ethylene not including high density polyethylene.

12. An extruder reactor suitable for use in carrying out the process of any of claims 7 to 10 comprising an extruder having a melt zone (27), a separate zone (12) for monomer addition, separate and downstream therefrom, a zone (20) for initiator addition, separate and downstream therefrom, a reaction zone (22) and separable and downstream therefrom a devolatilsation zone (23).

13. An extruder as claimed in Claim 12 wherein the monomer addition zone (12) has at least one flighted screw such that, in use, the monomer addition takes place on full screws under full pressure but not under high shear.

14. An extruder as claimed in Claim 12 or 13 which is a twin screw counter-rotating tangential extruder.

## Revendications

1. Un procédé pour préparer un copolymère greffé, qui comprend (a) l'introduction d'un ou plusieurs polymères d'éthylène, n'incluant pas le polyéthylène haute densité, dans un réacteur de fusion, (b) l'introduction de monomère contenant au moins 50% en poids de méthacrylate de méthyle, et (c) la polymérisation du monomère en présence d'un initiateur et du polymère ou des polymères fondus dans des conditions telles qu'on provoque la polymérisation par greffage, mais en l'absence de solvant qui dissout on gonfle le polymère.

2. Un procédé comme revendiqué dans la revendication 1, dans lequel le polymère ou les polymères comprennent un ou plusieurs des composés suivants: les copolymères d'éthylène-propylène, les terpolymères d'éthylène-propylène-diène, les copolymères d'éthylène-acétate de vinyle, les copolymères d'éthylène-acrylate d'éthyle, et les mélanges de copolymère(s) éthylène-propylène et de polymère(s) de polyéthylène de basse densité.

3. Un procédé comme revendiqué dans la revendication 1, dans lequel le réacteur de fusion est un réacteur d'extrusion.

4. Un procédé comme revendiqué dans la revendication 3, dans lequel le réacteur d'extrusion est une extrudeuse tangentielle à vis jumelles tournant en sens inverses ayant une zone d'addition du monomère, une zone séparée pour l'addition de l'initiateur en aval de la zone d'addition du monomère, et une zone séparée de réaction.

5. Un procédé comme revendiqué dans la revendication 4, dans lequel la zone d'addition du monomère comprend une section de vis filetée et est telle que cette addition de monomère est effectuée sur les vis pleines sous pleine pression, mais pas sous effort de cisaillement.

6. Un procédé comme revendiqué dans toute revendication précédente, dans lequel le rapport du monomère ajouté au polymère va de 5:95 à 50:50 en poids.

7. Un procédé comme revendiqué dans toute revendication précédente, dans lequel l'initiateur est présent dans la proportion de 0,01 à 4% en poids par rapport au monomère.

8. Un procédé comme revendiqué dans toute revendication précédente, dans lequel l'initiateur contient le 2,5-diméthyl-2,5-di-t-butylpéroxyhéxyne-3.

9. Un procédé comme revendiqué dans toute revendication précédente, dans lequel la température de la réaction est comprise entre 100°C et 225°C.

10. Un procédé comme revendiqué dans la revendication 9, dans lequel la température est comprise entre 150°C et 200°C.

11. Une composition comprenant du chlorure de polyvinyle et un polymère, modifiant l'impact, d'un monomère comprenant au moins 50% en poids de méthacrylate de méthyle greffé sur l'un ou plusieurs polymères de l'éthylène ne comprenant pas le polyéthylène de haute densité.

12. Un réacteur d'extrusion approprié pour être utilisé dans l'exécution du procédé selon l'une quelconque des revendications 1 à 10, comprenant une extrudeuse ayant une zone de fusion (27), une zone séparée (12) pour l'addition du monomère, séparée et en aval de celle-ci, une zone (20) pour l'addition de l'initiateur, séparée et en aval de celle-ci, une zone de réaction (22) et séparée et en aval de celle-ci une zone (23) pour l'élimination des matières volatiles.

13. Une extrudeuse comme revendiquée dans la revendication 12, dans laquelle la zone d'addition du monomère (12) possède au moins une vis filetée telle que, lors de l'utilisation, l'addition du monomère s'effectue sur pleines vis sous pleine pression mais pas sous cisaillement élevé.

14. Une extrudeuse comme revendiquée dans la revendication 12 ou 13, qui est une extrudeuse tangentielle à vis jumelles tournant en sens opposés.

## Patentansprüche

1. Verfahren zur Herstellung eines Pfropfcopolymeren, dadurch gekennzeichnet, daß (a) eines oder mehrere Polymere von Ethylen, jedoch ausschließlich von hochdichtem Polyethylen, in einen Schmelzreaktor eingeführt werden, (b) ein Monomeres aus wenigstens 50 Gew.-% Methylmethacrylat eingeführt wird und (c) das Monomere in Gegenwart eines Initiators und einer Schmelze des oder der Polymeren unter derartigen Bedingungen polymerisiert wird, daß eine Pfropfpolymerisation verursacht wird, jedoch in Abwesenheit von Lösungsmittel, welches das Polymere auflöst oder anquellt.

2. Verfahren nach Anspruch 1, dadurch gekennzeichnet, daß das Polymere oder die Polymeren aus einem oder mehreren der folgenden besteht bzw. bestehen: Ethylen / Propylen - Copolymeren, Ethylen/-Propylen / Dien - Terpolymeren, Ethylen / Vinylacetat - Copolymeren, Ethylen / Ethylacrylat-Copolymeren sowie Mischungen aus Ethylen/Propylen - Copolymer(en) und Polyethylenpolymer(en) mit niedriger Dichte.

3. Verfahren nach Anspruch 1, dadurch gekennzeichnet, daß der verwendete Schmelzreaktor ein Extruderreaktor ist.

4. Verfahren nach Anspruch 3, dadurch gekennzeichnet, daß der Extruderreaktor ein sich in Gegenrichtung drehender tangentialer Doppelschneckenextruder mit einer Monomerzugabezone, einer getrennten Initiatorzugabezone anschließend an die Monomerzugabezone und einer getrennten Reaktionszone ist.

5. Verfahren nach Anspruch 4, dadurch gekennzeichnet, daß die Monomerzugabezone einen Gewindeschneckenabschnitt aufweist und derart ausgestaltet ist, daß die Monomerzugabe bei vollen Schnecken unter vollem Druck, jedoch nicht unter hoher Scherwirkung, erfolgt.

6. Verfahren nach einem der vorhergehenden Ansprüche, dadurch gekennzeichnet, daß das Verhältnis von Monomerem, das dem Polymeren zugesetzt wird, 5:95 bis 50:50, bezogen auf das Gewicht, beträgt.

7. Verfahren nach einem der vorhergehenden Ansprüche, dadurch gekennzeichnet, daß der Initiator in einer Menge von 0,01 bis 4 Gew.-%, bezogen auf das Monomere, vorliegt.

8. Verfahren nach einem der vorhergehenden Ansprüche, dadurch gekennzeichnet, daß der Initiator aus 2,5-Dimethyl-2,5-di-tert.-butylperoxyhexin-3 besteht.

9. Verfahren nach einem der vorhergehenden Ansprüche, dadurch gekennzeichnet, daß die Reaktionstemperatur 100 bis 225°C beträgt.

10. Verfahren nach Anspruch 9, dadurch gekennzeichnet, daß die Temperatur 150 bis 200°C beträgt.

11. Masse aus Polyvinylchlorid und einem die Schlagfestigkeit modifizierenden Polymeren aus einem Monomeren aus wenigstens 50 Gew.-% Methylmethacrylat, das auf eines oder mehrere Polymere aus Ethylen, jedoch kein Polyethylene mit hoher Dichte, aufge-pfropft ist.

12. Extruderreaktor, der für eine Verwendung zur Durchführung des Verfahrens gemäß den Ansprüchen 1 bis 10 geeignet ist, aus einem Extruder mit einer Schmelzzone (27), einer getrennten Zone (12) für die Monomerzugabe, einer getrennten und sich daran anschließenden Zone (20) für die Initiatorzugabe, einer getrennten und sich daran anschließenden Reaktionszone (22) und einer getrennten und sich daran anschließenden Entflüchtigungszone (23).

13. Extruder nach Anspruch 12, dadurch gekennzeichnet, daß die Monomerzugabezone (12) wenigstens eine mit einem Gewindegang versehene Schnecke der Art aufweist, daß während des betriebs die Monomerzugabe bei vollen Schnekken unter vollem Druck, jedoch nicht unter hoher Scherwirkung, erfolgt.

14. Extruder nach Anspruch 12 oder 13, dadurch gekennzeichnet, daß es sich um einen Doppelschneckentangentialextruder mit entgegengesetzter Drehrichtung handelt.

MELT ZONE 27 | MONOMER MIX ZONE 12 | INITIATOR MIX ZONE 20 | REACTION ZONE 22 | DEVOLATILIZATION EXTRUSION ZONE 23